# EUROPEAN PATENT APPLICATION

(11) **EP 4 811 648 A1**
(43) Date of publication of application: **23.09.2026**
(21) Application number: 26158771.1
(22) Date of filing: 16.02.2026
(51) Int. Cl.: H02P 25/22, B64D 27/34, H02K 3/28, H02P 29/024, H02P 29/028, H02P 29/032

(54) **BIFILAR ELECTRIC DRIVE SYSTEM WITH INTER-TURN SHORT CIRCUIT MITIGATION AND METHOD OF OPERATING THE SYSTEM**

(30) Priority: 21.03.2025 GB 202504151
(71) Applicant: Rolls-Royce Deutschland Ltd & Co KG, 15827 Blankenfelde-Mahlow (DE)
(72) Inventor: YIRISAW, Tadele, 15827 Blankenfelde-Mahlow (DE); REEH, Andreas, 15827 Blankenfelde-Mahlow (DE)

(57) **Abstract**

An arrangement (1) comprises: an electric machine (2, 2') with a first winding system (WS1) and a second winding system (WS2), wherein at least one electrical conductor (120) of the first winding system (WS1) and at least one electrical conductor (121) of the second winding system (WS2) are at least partially wound around a common winding axis (A), wherein turns of the electrical conductors (120, 121) alternate in a direction of the winding axis (A); a first inverter (134A) for supplying the first winding system (WS1) with a multi-phase current; a second inverter (134B) for supplying the second winding system (WS2) with a multi-phase current; and a DC bus (30) providing a DC current to each of the inverters (134A, 134B), wherein at least one of the inverters (134A, 134B) is electrically connected to the DC bus (30) and/or to the electrical conductors (120, 121) of the respective winding system (WS1, WS2) via protection switches (14).

## Description

### TECHNICAL FIELD

The present disclosure relates in particular to an arrangement with an electric machine and to an aircraft having such an arrangement.

### BACKGROUND

The electric machine of such an arrangement includes an electrical winding system. By applying voltages to the winding system, particularly voltages that vary over time, currents are driven which induce magnetic fields that may cause a rotation of a rotor.

Especially in conventional multiphase rotating field machines, (e.g., having a permanently excited rotor), such as in drive systems based on permanent-magnet synchronous machines, it is problematic when a winding short circuit occurs in a coil between adjacent turns. In particular in such electric machines, the problem exists that, in the event of such a winding short circuit during intended operation, a large electrical current may be induced in the loop created by the short circuit, which may result in a thermal destruction of the windings. This is relevant not only, but particularly, in aircrafts in which, e.g., permanently excited rotating-field machines are used.

### SUMMARY AND DESCRIPTION

The object of the present disclosure is to provide an improved arrangement with an electric machine, e.g., for an electric drive system. The scope of the present disclosure is defined solely by the appended claims and is not affected to any degree by the statements within this summary. The present embodiments may obviate one or more of the drawbacks or limitations in the related art.

According to one aspect, an arrangement, e.g., for an aircraft or other kind of vehicle, is provided. The arrangement comprises an electric machine with a first winding system and a second winding system wherein at least one electrical conductor of the first winding system and at least one electrical conductor of the second winding system are at least partially wound around a common winding axis, wherein the turns of the electrical conductors of the different winding systems alternate in a direction of the winding axis. The arrangement further comprises a first inverter for supplying the first winding system with a multi-phase current, a second inverter for supplying the second winding system with a multi-phase current and a DC bus providing a DC current to each of the inverters. Therein, at least one of the inverters is electrically connected to the DC bus via protection switches. Alternatively, or in addition, the at least one of the inverters (or each of the inverters) is electrically connected to each electrical conductor of the respective winding system via a respective protection switch.

The alternating adjacent arrangement of the conductor windings of the first and second winding systems may also be referred to as bifilar arrangement of the electrical conductor of the first winding system with the electrical conductor of the second winding system. The electrical conductors of the two winding systems are arranged adjacently in a bifilar manner. The alternating arrangement of the electrical conductors of the two winding systems allows to prevent, in the case of an short-circuit within a coil between two adjacent winding turns, creating a closed loop, because every connection between the adjacent turns will instead create a connection of the two winding systems that were electrically separate before. Therefore, the creation of a closed loop, in which during, e.g., further rotation of a rotor of the electric machine very large currents could be induced, is avoided.

In the configuration of a bifilar coils based drive without galvanically separated sources, however, it has been found that with the common DC bus for both inverters unintended currents may flow, even if the power electronic switches are all turned off in one of the two inverters, e.g., due to the further rotation of the rotor of the electric machine and the conductivity of the anti-parallel diodes. This may induce currents which can lead to subsequent faults even if all the inverters are switched off.

It has been further found that the path along which such currents could flow, extends through both winding systems being connected due to the short circuit and the common DC bus. By decoupling at least one of the inverters from the DC bus, this can be prevented. Alternatively (or in addition), one of the three-phase winding systems can also be decoupled from the respective inverter, e.g., by opening three (AC-side) protection switches. In addition, it is possible to disconnect one of the inverters from the DC bus or one of the three-phase systems from its inverter and continue operation of the other inverter, such that the electric machine can still provide (e.g., approximately half) torque, even with the fault. Thus, an improved arrangement for an electric machine is provided. By opening the protection switches, the at least one of the inverters (e.g., one of the inverters or each of the inverters) is electrically disconnected from the DC bus. The arrangement may be a drive system, e.g., for an aircraft.

Notably, a plurality of protection switches is provided. It is not sufficient to merely provide one protection switch, because this would not allow to continue operating the (half) electric machine with the fault.

For example, the arrangement comprises a control unit which is configured to open the (e.g., all) protection switches of (the) one of the inverters (thereby either decoupling the inverter from the DC bus or the respective winding system from the inverter), and then, to continue operating the electric machine with the other one of the two inverters.

At least one of the protection switches may (when closed) electrically connect the first inverter to a positive potential of the DC bus and at least one of the protection switches may (when closed) electrically connect the first inverter to a negative potential of the DC bus. Alternatively, or in addition, at least one of the protection switches may (when closed) electrically connect the second inverter to the positive potential of the DC bus and at least one of the protection switches may (when closed) electrically connect the second inverter to the negative potential of the DC bus. The protection switches may comprise, e.g., two or four protection switches. This allows to avoid the flow of induced currents between the two winding systems.

For example, the first inverter and the second inverter each are electrically connected to positive potential of the DC bus via one of the protection switches and to the negative potential of the DC bus via one of the protection switches (and can be disconnected there from by opening the protection switches). This allows to selectively disconnect one of the two inverters and winding systems, and to continue operating the other one of the winding systems even in case of an inter-turn short circuit.

The arrangement may further comprise a control unit. The control unit may be configured to detect an error state of at least one of the winding systems. The control unit may be configured to open the protection switches in response to the detection of the error state. This allows to quickly react to an error state automatically. The control unit may comprise one or more operatively connected parts that may be located adjacent to one another or displaced with respect to one another. The control unit may be a part of an inverter system that comprises the two inverters. Further, the control unit may at least partially be embodied as software and/or hardware.

The control unit may be configured to detect the error state by measuring a parameter and comparing the parameter to a threshold. For example, the control unit is configured to detect that a measured phase current is exceeding a threshold, or it may detect that a measured torque signal or a temperature of the electrical machine (e.g., adjacent to at least one of the winding systems) is exceeding a threshold. In this manner, a fault can be detected early and the protection switches can be opened to mitigate the fault quickly.

In an example, one or more, e.g., each of the protection switches, comprises a semiconductor switch such as a transistor, a thyristor, a power MOSFET (metal-oxide-semiconductor field-effect transistor) or an IGBT (Insulated-gate bipolar transistor). This not only allows a fast switching operation but also a reversible switching state. For example, when it turns out after opening the protection switches that the detection of the error state was a false alarm and that actually the winding systems have no short circuit, the protection switches can be closed again.

In an example, one or more, e.g., each of the protection switches, comprises a pyro fuse. This allows to reliably open the electric connection with a galvanic separation of the conductors.

In an example, one or more, e.g., each of the protection switches, comprises a relay.

Relays allow both a secure galvanic separation of the conductors as well as a reversible switching operation.

The first winding system may comprise multiple, e.g., three, phases connected to one another with one respective end at a common first star point and to an inverter unit of the first inverter with the respective other end. Alternatively, or in addition, the second winding system may comprise multiple, e.g., three, phases connected to one another with one respective end at a common second star point and to an inverter unit of the second inverter with the respective other end. Such an electric machine can provide a large torque with a high efficiency.

Alternatively, instead of the star point connection(s), full H-bridge inverters may be used. Then, each electrical conductor is connected to one inverter unit with one end and to another inverter unit at its other end.

Each of the three phases of the first winding system and/or of the second winding system can be connected to the respective inverter via one of the protection switches.

The electric machine may comprise a stator with the winding systems and a rotor rotatably mounted at the stator. Such an electric machine may be used as a motor and/or a generator.

According to one aspect, a vehicle, (e.g., an aircraft), is provided. The vehicle includes the arrangement (at least one such arrangement) according to any configuration described herein, in particular for driving a thrust-generating apparatus, e.g. a propeller. The advantages of the arrangement described herein apply especially to a vehicle, in particular an aircraft. However, the assembly may also be used in a gas pump, in a marine engine, in a wind turbine, in an electric car, or in a generator.

According to one aspect, a method of operating the arrangement of any aspect or embodiment described herein is provided. The method comprises: operating the first winding system by supplying (by means of the first inverter) the first winding system with the multi-phase current and/or operating the second winding system by supplying (by means of the second inverter), the second winding system with the multi-phase current; detecting a fault in at least one of the winding systems; opening the protection switches of one of the inverters (DC-side and/or AC-side) while keeping the protection switches of the other inverter, if present, closed; and continuing to operate the winding system of the other one of the inverters by continuing to supply, by means of this other one of the inverters, the multi-phase current to its winding system. The method may be performed, e.g., by a control unit of the arrangement.

### BRIEF DESCRIPTION OF THE DRAWINGS

Embodiments will now be described by way of example with reference to the figures in which:
- FIG. 1: depicts a schematic sectional illustration of an example of a basic design of a permanently excited, three-phase electric machine having an internal rotor.
- FIG. 2: depicts a schematic, perspective exploded view of an example of a design of an arrangement comprising a stator of the electric machine according to FIG. 1 with tooth windings.
- FIG. 3: depicts a schematic illustration of an example of part of a tooth winding of the arrangement according to FIG. 2, in which turns of a first and second electrical conductor are arranged in a bifilar manner.
- FIG. 4: depicts a schematic illustration of an example of a permanently excited electric machine for operation at a three-phase AC voltage.
- FIGS. 5 and 6: depict schematic circuit diagram illustrations of examples of tooth windings and inverter units of an inverter of the electric machine according to FIG. 2 and FIG. 4, respectively.
- FIG. 7: depicts an example of switching signals for the inverter units.
- FIG. 8: depicts a block diagram of an example of components of the inverter.
- FIGs. 9 and 10: depict currents in winding systems having an insulation fault.
- FIG. 11: depicts an arrangement for inter-turn short circuit mitigation.
- FIG. 12: depicts the arrangement of FIG 11 with an inter-turn short circuit when protection switches of the arrangement would be in a state in which the protection switches are closed.
- FIG. 13: depicts an arrangement for inter-turn short circuit mitigation.
- FIGs. 14-16: depict different protection switches for the arrangements of FIGs. 11 and 13.
- FIG. 17: depicts currents through diodes in the arrangement in FIG 12.
- FIG. 18: depicts an example of an aircraft in the form of an airplane having an electrically driven propeller and the electric machine.
- FIG. 19: depicts a further arrangement for inter-turn short circuit mitigation.
- FIG. 20: depicts a method of operating an arrangement.

### DETAILED DESCRIPTION

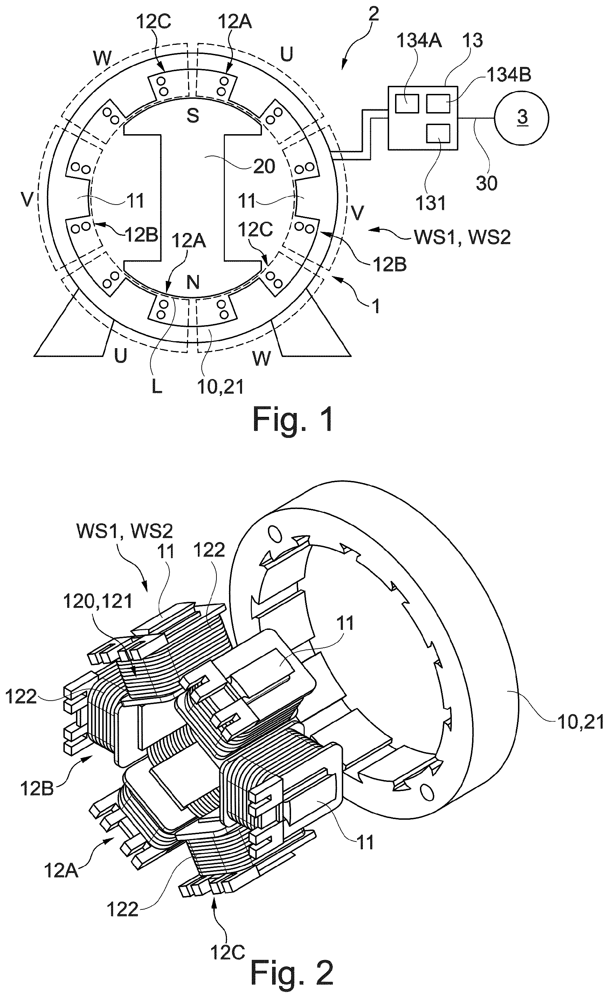

FIG. 1 shows an arrangement 1 including an electric machine 2. The electric machine 2 is shown in a schematic sectional illustration. In the present example, the electric machine 2 is a rotating electric machine 2 in the form of a permanently excited synchronous machine. In FIG. 1, the electric machine 2 is in the form of a machine with an internal rotor. The electric machine 2 comprises a stator 21 that has an opening, in particular a through-opening in which a rotor 20 is arranged in a rotatably mounted manner.

The stator 21 includes a body 10 in the form of a laminated core, on which teeth are anchored, which are referred to below as stator teeth 11. The stator teeth 11 are aligned with an air gap L between the body 10 of the stator 21 and the rotor 20. The stator teeth 11 protrude radially from the body 10, in the present case radially inward. The stator 21 has a stator winding that includes a plurality of windings 12A-12C (in the form of tooth windings). The stator winding in the present case is designed for three-phase operation, (connected to a three-phase AC voltage having phases U, V, W). During intended operation of the electric machine 2, the AC voltage is accordingly applied to the stator winding.

The rotor 20 is in the form of a salient-pole rotor that includes permanent magnets for providing the magnetic flux. In the present configuration, there is provision for the rotor 20 to have exactly one magnetic north pole N and one magnetic south pole S. In alternative configurations, there may also be provision for more magnetic poles, e.g., in alternation in the circumferential direction transverse to an axis of rotation of the rotor 20 (relative to the stator 21).

The rotor 20 is rotatably mounted. As a result of the three-phase AC voltage, the phases U, V, W thereof each being phase-shifted by 120°, a magnetic rotating field is generated during intended operation, which magnetic rotating field interacts with the permanently excited magnetic field provided by the rotor 20 such that a corresponding rotational movement of the rotor 20 in relation to the stator 21 may be brought about during operation of the motor. In certain examples, the electric machine 2 is used as a drive motor, e.g., for a propeller of an aircraft. The portions of the stator winding assigned to the respective phases U, V, W are schematically illustrated in FIG. 1. One winding 12A-12C is in each case respectively assigned to one of the phases U, V, W.

The stator winding of the electric machine 2 is connected to an inverter system 13 (in this example of a three-phase design). The inverter system 13 provides the electric AC voltage with the three phases U, V, W. The inverter system 13 obtains the electric energy required for the intended operation from an energy source 3 connected to the inverter system 13. In the present configuration, the energy source 3 is a DC voltage source which provides electrical energy from a suitable electrical energy store, for example, a rechargeable battery or the like. Alternatively, or additionally, a fuel cell and/or the like or, in the case of stationary applications, an energy supply from a public energy supply network may be provided, for which purpose a rectifier for converting an alternating current of the public energy supply network into direct current may be provided.

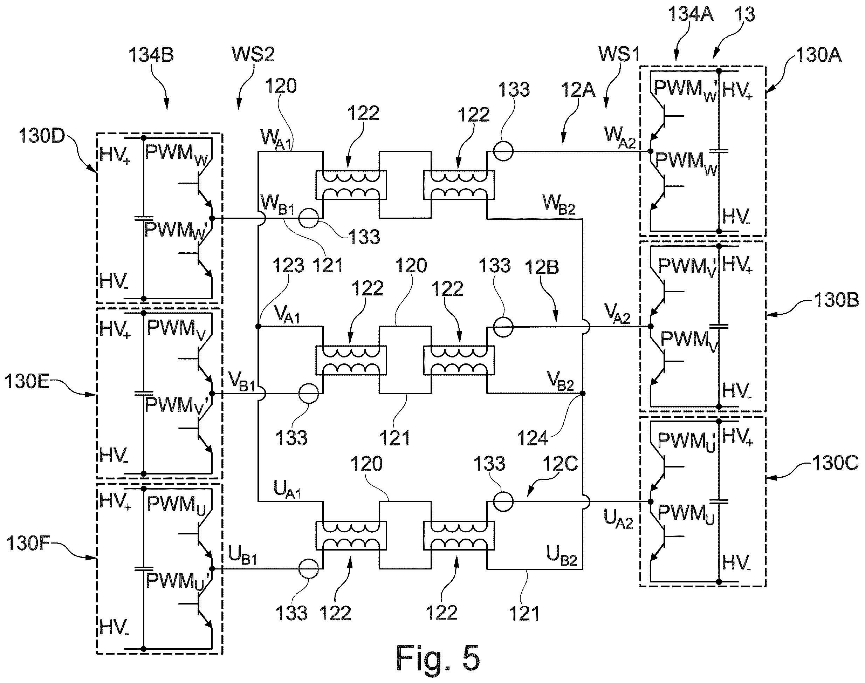

The inverter system 13 has inverter units assigned for providing the phases U, V, W, which inverter units are explained in more detail further below in connection with FIG. 5, for example. In this case, each inverter unit has its own half-bridge circuit. The half-bridge circuits are connected to a common DC bus 30 circuit for the inverter system 13, in order to thus be supplied with electrical energy. The DC bus 30 may have a voltage of 25 V or more, 100 V or more, or in the range of 800 to 3000 V. The DC bus 30 provides electrical current to all inverters 134A, 134B and their inverter units of the inverter system 13.

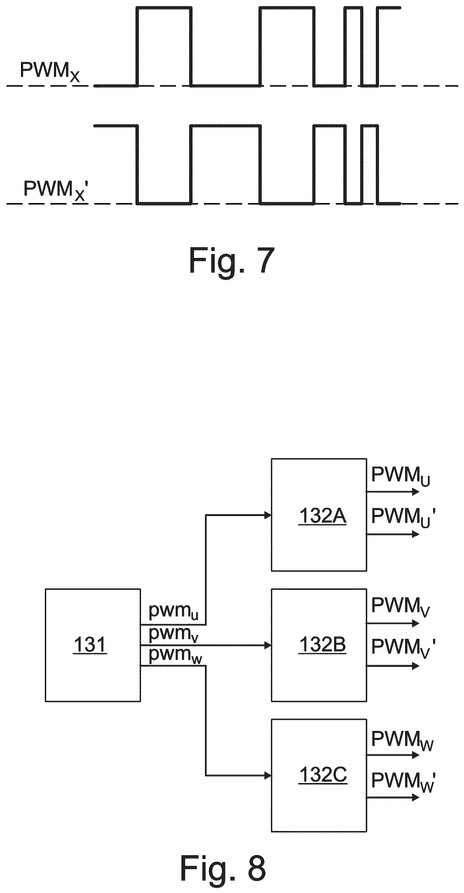

The half-bridge circuit has a series circuit including two electronic switching elements (e.g., transistors) that are connected to the DC bus 30. The electronic switching elements are operated in a clock mode, as explained in more detail below in connection with FIG. 7, which provides a switching signal (e.g., signals for the gate drives) in the manner of a PWM signal, for example. The corresponding phase U, V, W of the three-phase AC voltage is then available at a respective center tap of the half-bridge circuits. Filtering is carried out by the inductance of the windings 12A-12C, with the result that an appropriate AC current is established for each phase U, V, W, which AC current may be virtually sinusoidal if the inverter units are suitably controlled.

The inverter system 13 comprises a first inverter 134A and a second inverter 134B. the first inverter 134A comprises a first set of inverter units, in this example three, i.e., one for each phase U, V, W. The second inverter 134B comprises a second set of inverter units, in this example three, i.e., one for each phase U, V, W. The windings 12A-12C are divided in two winding systems WS1, WS2. Thereof, a first winding system WS1 is electrically connected to the first inverter 134A and is not electrically connected to the second inverter 134B. Accordingly, the second winding system WS2 is electrically connected to the second inverter 134B and is not electrically connected to the first inverter 134A. The first inverter 134A can operate the first winding system WS1 independently of the second inverter 134B and second winding system WS2 (and vice versa). If one of the inverters 134A, 134B or one of the winding systems WS1, WS2 fails, the other can still be operated to drive the rotor 20.

The inverter system 13 further comprises a control unit 131. The control unit 131 controls the inverters 134A, 134B.

FIG. 2 shows a schematic exploded illustration of the stator 21 of the electric machine 2. The stator 21 has the body 10 in which the stator teeth 11 may be joined together with the annular body 10 by a mechanical connection and may thus be fixed thereon, in particular, mechanically fixed thereon. Alternatively, the stator teeth 11 may be formed in one piece with the body 10.

The stator teeth 11 are fitted with respective winding portions 122 of the windings 12A-12C. The stator winding has a plurality of windings 12A-12C, (e.g., exactly three windings). A respective one of the windings 12A-12C may be arranged at least on one of the stator teeth 11. In the present case, each winding 12A-12C extends over a plurality of stator teeth 11, (e.g., specifically two opposite stator teeth). For this purpose, each winding 12A-12C may have at least one winding portion 122 or a plurality of winding portions 122 (e.g., two winding portions). Each winding portion 122 surrounds (e.g., exactly) one stator tooth 11. In this example, each winding portion 122 forms a coil. For example, each winding 12A-12C comprises at least one coil or more than one coil. In the present example, each winding 12A-12C comprises two coils.

Each winding 12A-12C has a respective first electrical conductor 120, which at each winding portion 122 is arranged in a plurality of turns circumferentially around the respective stator tooth 11. Between the winding portions 122, the first electrical conductor 120 includes one or more corresponding connecting portions via which the portions of the first electrical conductor 120 at the winding portions 122 are electrically connected to each other.

Each winding 12A-12C further has a respective second electrical conductor 121 that likewise at each winding portion 122 is arranged in a plurality of turns circumferentially around the respective stator tooth 11. Between the winding portions 122, the second electrical conductor 121 includes one or more corresponding connecting portions via which the portions of the second electrical conductor 121 at the winding portions 122 are electrically connected to each other.

The first electrical conductors 120 and the second electrical conductors 121 each have end portions to which they are connected in a manner described in more detail below. Between the respective end portions (and, in this example, over their entire lengths), the first electrical conductors 120 and the second electrical conductors 121 are electrically insulated from each other. The windings 12A-12C are connected in the electric machine 2 such that the three-phase connection to the inverter system 13 is present.

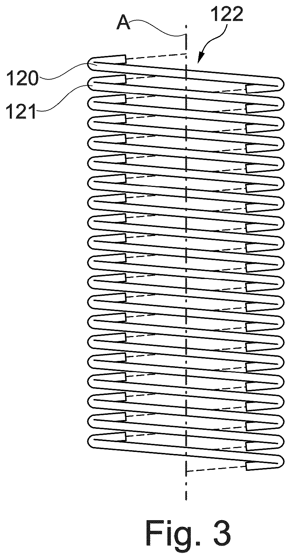

FIG. 3 shows a schematic illustration of a winding portion 122 of one of the windings 12A-12C. The first electrical conductor 120 in this case is wound around the stator tooth 11, which is not illustrated in FIG. 3. The winding on the stator tooth 11 extends here around and along a winding axis A. In the present case, the winding portion 122 is configured in the form of an elongate coil along the winding axis A.

Furthermore, the winding portion 122 of the winding 12A-12C includes the respective second electrical conductor 121 that is electrically insulated from the first electrical conductor 120. The second electrical conductor 121 also has a plurality of turns arranged circumferentially around the same stator tooth 11, so that the winding on the stator tooth 11 extends around and along the winding axis A. The respective turns of the first and second electrical conductors 120, 121 are arranged in a bifilar manner. In other words, one turn of the first electrical conductor 120 is arranged between two adjacent turns of the second electrical conductor 121 (and vice versa) along the winding axis A of the winding portion 122 (with the exception of the outermost two turns). This has the advantage that, in the event of an inter-turn short circuit between two adjacently arranged turns, the inter-turn short circuit occurs between the first electrical conductor 120 and the second electrical conductor 121. An inter-turn short circuit thus does not occur inside a winding of the same electrical conductor. This makes it possible to prevent large currents in the case of an inter-turn short circuit and therefore large thermal and electrical stresses.

Notably, the coils formed by the respective winding portions 122 may be elongate (e.g., in a direction parallel to the rotor 20 rotational axis), as shown in FIG. 2. Here, the winding axis A may be defined to be at a position inside the coil, e.g., in the center of the coil. More complicated coil shapes are also possible, such as bent along the longitudinal axis, particular for alternative machine topologies such as a transverse flux machine or the like.

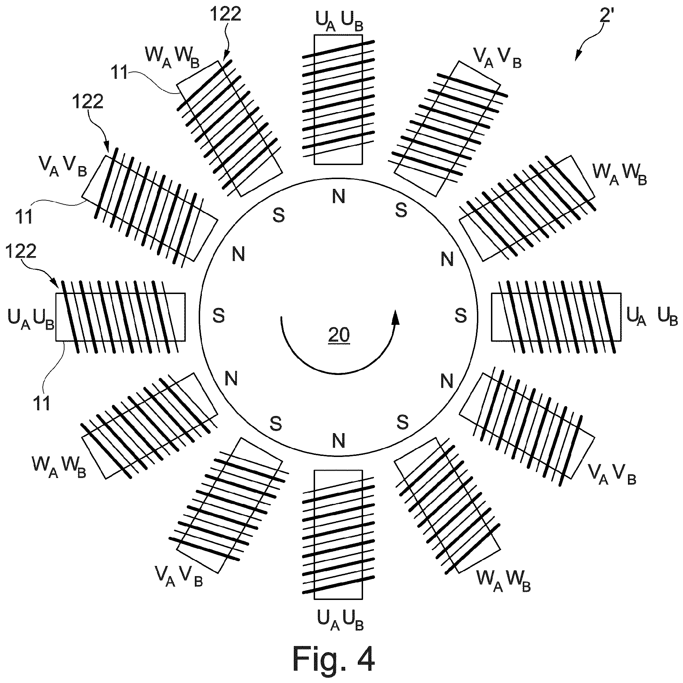

FIG. 4 shows a schematic illustration of an electric machine 2' in the form of a synchronous machine that, in contrast to the electric machine 2 according to FIGS. 1 and 2, now has a twelve-pole rather than a six-pole design. The corresponding stator therefore has twelve stator teeth 11. These are arranged equidistantly in the circumferential direction in the present case. The rotor 20 is again arranged in a through-opening formed by the stator, which rotor likewise has a twelve-pole design in this configuration and therefore provides six north poles N and six south poles S arranged in alternation in the circumferential direction. Here too, the magnetic flux provided by the rotor 20 is provided by permanent magnets arranged, e.g., in the region of the outer circumference of the rotor 20. The numbers of poles are provided by way of example and larger or smaller numbers are also possible.

Each stator tooth 11 of the stator teeth 11 is also equipped here with a winding portion 122 of one of the three windings 12A-12C. Each winding of the three windings 12A-12C again has a respective first electrical conductor and a respective second electrical conductor (illustrated by different line thicknesses in FIG. 4 purely for the purposes of illustration) that are wound onto the respective stator teeth 11 in a bifilar manner. This electric machine 2' is likewise designed to be supplied with a three-phase AC voltage, wherein each of the phases is again denoted using U, V, W.

The electric machines 2, 2' described with reference to FIGS. 1-4 are inner-runner radial flux machines. Notably, the principles described herein can also be applied to outer-runner radial flux machines as well as to a transverse flux machine and to an axial flux machine.

FIG. 5 shows an electrical interconnection of the windings 12A-12C and the inverter units 130A-130F of the inverter system 13 of the electric machine 2 according to FIG. 1.

The first electrical conductors 120 (e.g., three first electrical conductors) of the windings 12A-12C form the first winding system WS1 and the second electrical conductors 121 (e.g., three second electrical conductors) of the windings 12A-12C form the second winding system WS2. The first winding system WS1 is connected to three inverter units 130A-130C. These three inverter units 130A-130C form the first three-phase inverter 134A. Each first electrical conductor 120 is connected with an end portion WA2, VA2, UA2 thereof to one of the inverter units 130A-130C. The respective other end portions WA1, VA1, UA1 of the first electrical conductors 120 are electrically connected to each other at a first star point 123.

The second winding system WS2 is connected to further three inverter units 130D-130F. These further three inverter units 130D-130F form the second three-phase inverter 134B. Each second electrical conductor 121 is connected with an end portion WB1, VB1, UB1 to one of the inverter units 130D-130F. The respective other end portions WB2, VB2, UB2 of the second electrical conductors 121 are electrically connected to each other at a second star point 124.

The inverter system 13 thus includes six inverter units 130A-130F, two for each of the three phases U, V, W, and of these two inverter units, one each for the first winding system WS1 and one for the second winding system WS2. As already described, each inverter unit 130A-130D has a half-bridge circuit. An optional capacitor is used as a low-pass filter in each case.

The (e.g., same) DC bus 30 voltage (designated by HV+ and HV-) is applied to the inverter units 130A-130F of both inverters 134A, 134B of the inverter system 13. For example, the DC voltage is 25 V or more, 100 V or more, or in a range of 800 to 3000 V.

Furthermore, all six winding portions 122 for the six stator teeth 11 are shown, wherein each winding of the first and second electrical conductors 120, 121 is illustrated only schematically.

First, the winding 12A for a first phase W will be considered. This winding 12A includes a first electrical conductor 120 and a second electrical conductor 121. Both electrical conductors 120, 121 extend over winding portions 122 on the same (e.g., one or more, in this example two) stator teeth 11 but are insulated from one another. Both electrical conductors 120, 121 have the aforementioned two end portions WA1, WA2, WB1, WB2. Here, both electrical conductors 120, 121 are free of junctions between their end portions WA1, WA2, WB1, WB2. The electrical conductors 120, 121 each establish an electrical connection between the respective two end portions WA1, WA2, WB1, WB2. The winding portions 122 of the winding 12A lie between the end portions WA1, WA2, WB1, WB2 of the electrical conductors 120, 121.

One end portion WA2 of the first electrical conductor 120 is electrically connected to a first inverter unit 130A of the inverter system 13, and the other end portion WA1 of the first electrical conductor 120 is electrically connected to the first star point 123. One end portion WB1 of the second electrical conductor 121 is electrically connected to a fourth inverter unit 130D of the inverter system 13, and the other end portion WB2 of the second electrical conductor 121 is electrically connected to the second star point 124.

The end portions of the first electrical conductor 120 of the winding 12B for a second phase V are denoted using VA1 and VA2. One end portion VA2 of the first electrical conductor 120 is electrically connected to the inverter system 13, specifically, to a second inverter unit 130B thereof, and the other end portion VA1 of the first electrical conductor 120 is electrically connected to the first star point 123.

The end portions of the second electrical conductor 121 of the winding 12B for the second phase V are correspondingly denoted using VB1 and VB2. One end portion VB1 of the second electrical conductor 121 is electrically connected to the inverter system 13, specifically, to a fifth inverter unit 130E thereof, and the other end portion VB2 of the second electrical conductor 121 is electrically connected to the second star point 124.

The end portions of the first electrical conductor 120 of the winding 12C for a third phase U are denoted using UA1 and UA2. One end portion UA2 of the first electrical conductor 120 is electrically connected to the inverter system 13, specifically to a third inverter unit 130C thereof, and the other end portion UA1 of the first electrical conductor 120 is electrically connected to the first star point 123.

The end portions of the second electrical conductor 121 of the winding 12C for the third phase U are correspondingly denoted using UB1 and UB2. One end portion UB1 of the second electrical conductor 121 is electrically connected to the inverter system 13, specifically, to a sixth inverter unit 130F thereof, and the other end portion UB2 of the second electrical conductor 121 is electrically connected to the second star point 124.

The arrangement 1 comprises the first winding system WS1 and the second winding system WS2. The winding systems WS1, WS2 are electrically disconnected (and isolated) from one another. However, both winding systems WS1, WS2 are powered by the same DC bus 30. As described above, the two winding systems WS1, WS2 have electrical conductors 120, 121 that form a plurality of coils in a bifilar arrangement. At least one (first) electrical conductor 120 (in the present example three first electrical conductors 120) of the first winding system WS1 and at least one (second) electrical conductor 121 (in the present example three second electrical conductors 121) of the second winding system WS2 are at least partially wound around a common winding axis A that alternate between winding systems in a direction of the winding axis A (e.g., as shown in Fig. 4). In the direction of the winding axis A, each turn of the first electrical conductor 120 within the coil is arranged (directly) between two turns of the second electrical conductor 121 (isolated from one another). Correspondingly, in the direction of the winding axis A, each turn of the second electrical conductor 121 within the coil is arranged (directly) between two turns of the first electrical conductor 120 (isolated from one another). Denoting the first electrical conductor 120 as "A" and the second electrical conductor 121 as "B", the arrangement along the winding axis A may be A-B-A-B (and so forth).

The arrangement 1 further comprises the inverter system 13 which includes the first inverter 134A for the first winding system WS1 and the second inverter 134B for the second winding system WS2. The first inverter 134A is configured for supplying the first winding system WS1 with a multi-phase (here: three-phase) current. The second inverter 134B is configured for supplying the second winding system WS2 with a multi-phase (here: three-phase) current.

The control unit 131 of the inverter system 13 may comprise several blocks or components that may be embodied as software and/or hardware and that may be located adjacent or distant to one another.

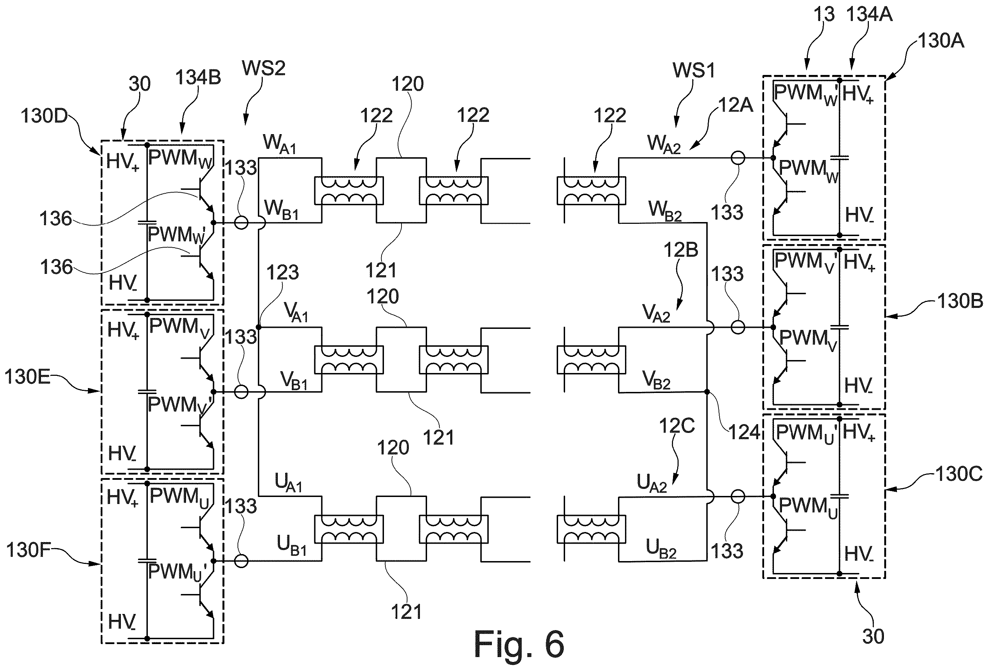

FIG. 6 shows substantially the same circuitry as FIG. 5, wherein more winding portions 122 are illustrated. It can be seen that the windings 12A-12C may have a smaller or larger number of winding portions 122 depending on the application, e.g., in total six (cf. in particular FIGS. 2 and 5), twelve (cf. in particular FIG. 4), or 18, to name just some examples.

While the windings 12A-12C are arranged between the inverter units 130A-130F according to FIGS. 5 and 6, this arrangement is only exemplary. Indeed, the inverters 134A, 134B may be electrically connected to the winding systems WS1, WS2 from the opposite ends, as shown in FIGs. 5 and 6, or from the same ends. In the latter case, the star points 123, 124 would be one the same side of the windings 12A-12C.

Furthermore, it may be seen that in FIGS. 5 and 6 the end portions, connected to the inverter units 130A-130F, of the first and second conductors 120, 121 of each individual one of the windings 12A-12C face away from one another with respect to the common winding portions 122.

To create the alternating three-phase voltage, currents introduced into the electrical conductors 120, 121 are controlled by switching the transistors (or other types of switches 136) of the inverter units 130A-130F. The transistors are controlled by signals, in the present case by pulse width modulated signals, which may also be referred to as PWM signals for short. The PWM signals alternate between two discrete values, e.g., "on" and "off", which open and close the corresponding transistor (or other type of switch 136), respectively.

FIG. 7 shows an example of such PWM signals, wherein X stands for the respective phase U, V, W. The PWM signals for the individual phases U, V, W are, e.g., the same, only shifted in time.

Furthermore, an inverted PWMX' signal is provided for each PWMX signal, which assumes the corresponding opposite discrete value in relation to the PWMX signal over time. The PWMX' signal corresponds to the inverted PWMX signal.

As illustrated, e.g., with reference to FIGS. 5 and 6, for each winding 12A-12C, the reverse PWM signal PWMW', PWMV', PWMU' is applied to the respective transistor of the inverter unit 130A, 130B, 130C of the first electrical conductor 120 connected to the positive electric potential HV+ of the DC voltage. By contrast, the PWM signal PWMW, PWMV, PWMU is applied to the transistor of the inverter unit 130A, 130B, 130C of the first electrical conductor 120 connected to the negative electric potential HV- of the DC voltage.

For the second electrical conductors 121, the PWM signals are applied in reverse. The PWM signal PWMW, PWMV, PWMU is applied to the transistor of the inverter unit 130D, 130E, 130F of the second electrical conductor 121 connected to the positive electric potential HV+ of the DC voltage. By contrast, the reverse PWM signal PWMW', PWMV', PWMU' is applied to the transistor of the inverter unit 130D, 130E, 130F of the second electrical conductor 121 connected to the negative electric potential HV- of the DC voltage.

In case that the inverters of the two systems are on the same side (i.e., the star point are also on the same side), the PWM signal of the phase does not need to be inverted.

It may therefore be seen that the same PWM signals may be applied to the inverter units 130A-130C of the first electrical conductor 120 as to the inverter units 130D-130F of the second electrical conductor 121.

FIG. 8 illustrates a possible generation of the PWM signals PWMX and the reverse PWM signals PWMX'. The control unit 131 of the inverter system 13 generates signals for the three phases U, V, W, which are designated here as pwmu, pwmv, pwmw. These are each provided to a power electronics driver 132A-132C, which generate the respective PWM signals and reverse PWM signals for the corresponding phase U, V, W based on them. The power electronics drivers 132A-132C are connected (e.g., electrically) to the inverter units 130A-130F of the respective phase U, V, W.

Returning to FIG. 5, the arrangement 1 comprises a plurality of sensors 133, each of the plurality of sensors 133 being configured for sensing at least one electrical parameter. At least one sensor 133 is arranged to sense the at least one electrical parameter at (and of) the first winding system WS1. At least one sensor 133 is arranged to sense the at least one electrical parameter at (and of) the second winding system WS2. In the present example, a plurality of sensors 133 is arranged to sense a respective electrical parameter at (and of) the first winding system WS1 and a plurality of sensors 133 is arranged to sense a respective electrical parameter at (and of) the second winding system WS2. Here, the electrical parameters are electrical currents.

Each one sensor 133 is arranged to sense the strength of the current through each phase U, V, W of each of the winding systems WS1, WS2, so, in the present example, six sensors 133 are provided (although other numbers are also possible). The sensors 133 generate sensor signals that are indicative of the respective electrical parameter, in the present example the current through the respective conductor.

In case of an insulation fault such as an inter-turn short circuit, the resistance between the winding systems WS1, WS2 changes. To detect an insulation fault based on the sensor signals, the control unit 131 is further configured to perform an insulation test, e.g., by measuring the electrical currents measured with the sensors 133 and comparing these currents with a threshold. If at least one of the currents is above the threshold, the control unit 131 concludes that an error state is present.

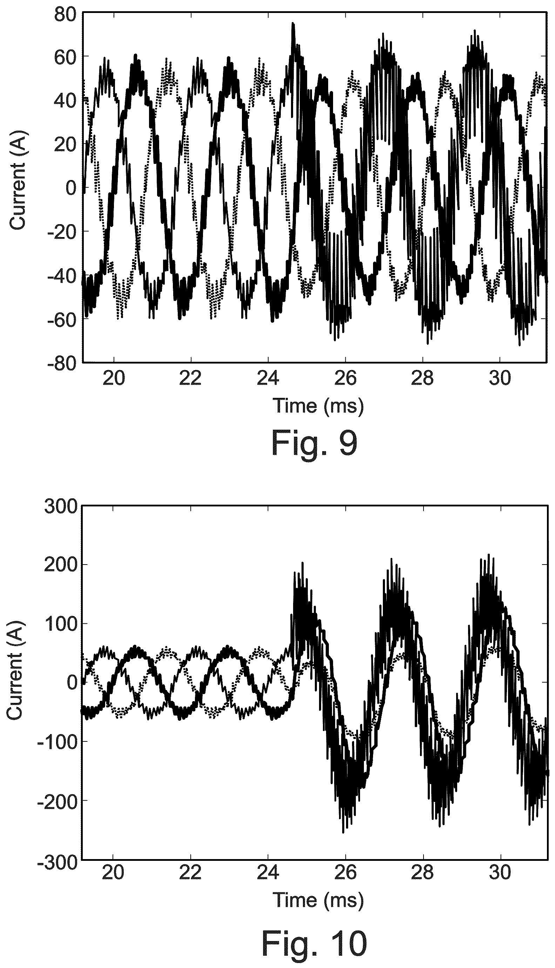

FIG. 9 shows the phase currents of the three phases U, V, W versus time. The first approx. 24 ms there is no fault. In this moment, a high resistance short circuit of 10 Ohms occurs. The diagram shows the three-phase current imbalance created by this turn-to-turn fault.

FIG. 10 shows the same diagram as FIG. 9, however, with a fault resistance of several orders of magnitude lower, namely, of 1 milliohm.

It can be seen that a sudden increase of the current (e.g., of the maximum current), e.g., beyond a threshold, can be interpreted as a sign of an insulation fault.

Alternatively, differential currents in a respective winding 12A-12C can be determined and compared to a threshold. As a further alternative, the sensors 133 may alternatively or additionally comprise temperature sensors that measure the temperatures at one or more locations, e.g., at the coils or close to the coils. If one of the temperatures is above a threshold, the control unit 131 concludes that an error state is present.

Alternatively, or additionally to the above-described fault detection, a voltage may be measured, e.g., at the star points 123 and 124 and/or a magnetic field can be measured, e.g., using a Hall sensor.

When a fault (e.g., an inter-turn short circuit) is detected, the control unit 131 optionally switches off all PWM signals (e.g., to zero).

However, opening all high-side and all low-side inverter switches 136 has been shown to be insufficient in some cases to eliminate the current flow through the fault location. As the two systems are tied to the same DC bus 30, even after such a measure, continued current flow is enabled via anti-parallel diodes of the passivated inverter module when further operating the other inverter module.

In order to prevent such a current and at the same time to continue to operate one of the partial machines (one inverter 134A, 134B and its winding system WS1, WS2), the arrangement 1 comprises switches 14 between at least one inverter 134A, 134B and the DC bus 30. For ease of reference, these switches 14 are also referred to as protection switches 14 in the following.

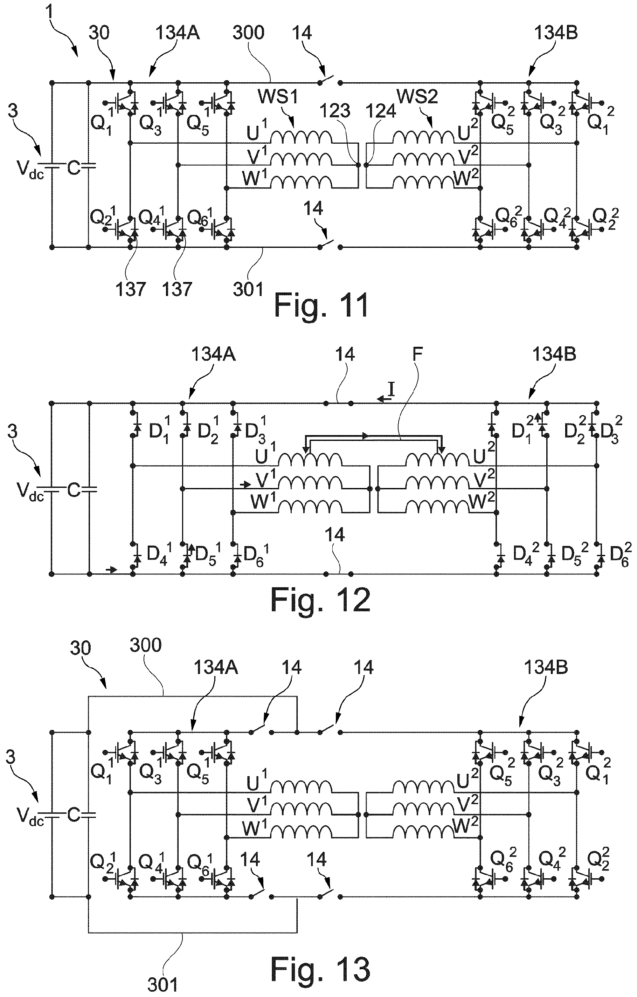

FIG. 11 shows the arrangement (in a simplified representation for the ease of reference). The DC bus 30 is shown as two parallel horizontal lines illustrating the two corresponding conductors.

Both inverters 134A, 134B are electrically connected to the DC bus 30. However, one of the inverters, in this example, the second inverter 134B, is electrically connected to the DC bus 30 via the protection switches 14. More specifically, the second inverter 134B has two supply connectors, one of which being connected to the positive terminal of the DC bus 30 and the other being connected to the negative terminal of the DC bus 30. All inverter units of the second inverter 134B are connected to these two supply connectors. Thus, all inverter units of the second inverter 134B are connected to the positive DC bus 30 terminal via one of the two protection switches 14 and all inverter units of the second inverter 134B are connected to the negative DC bus 30 terminal via the other one of the two protection switches 14. When the (exactly two) protection switches 14 are opened, as shown in FIG. 11, all inverter units and inverter switches 136 internal of the second inverter 134B are disconnected from the DC bus 30. The DC bus has a positive potential 300 and a negative potential 301. When the protection switches 14 are opened, the entire second inverter 134B is disconnected from the DC bus 30 (and the DC voltage). The additional protection switches 14 on the DC potentials 300, 301 are arranged between the two electrical systems (with the respective inverter 134A, 134B and winding system WS1, WS2)

Even if the protection switches 14 are open, the first inverter 134A is operational. This will be explained in more detail further below.

In FIG. 11, the inverter switches 136 internal the inverters 134A, 134B are denoted by Q1-Q6 with an added "1" for the first inverter 134A and a "2" for the second inverter 134B. The three phases U, V, W are denoted accordingly. Each inverter switch 136, Q1-Q6 is connected in parallel to a diode 137. The diodes 137 are arranged to block a current in the direction opposite the DC voltage of the DC bus 30.

In FIG. 11, the energy source 3 is shown with an additional capacitor between the two potentials 300, 301 of the DC bus 30. This may be present in addition or alternatively to the individual capacitors of the inverter units 130A-130F as shown in FIGs. 5 and 6.

Reference is now made to FIG. 12. Therein, the arrangement 1 is shown again, however with (still) closed protection switches 14. Also, the internal inverter switches 136 (Q1-Q6) are not shown again although they are present.

The control unit 131 prescribes reference currents for each phase U, V, W based on a (healthy) machine model and phase current measurements. In case of a detected fault, protection systems could stop the inverter operation by opening all internal inverter switches 136 (Q1-Q6) of the half bridges. The circuit diagram of FIG. 12 shows the current flow via the diodes 137 (denoted as D1-D6 with an added "1" for the first inverter 134A and a "2" for the second inverter 134B). The internal inverter switches 136 are not drawn again as they are assumed all in the "open" state.

A fault F is present between two adjacent windings, i.e., between a first electrical conductor 120 of the first winding system WS1 and a second electrical conductor 121 of the second winding system WS2. Due to a continued voltage induction by the rotating rotor 21 a current flow is still possible.

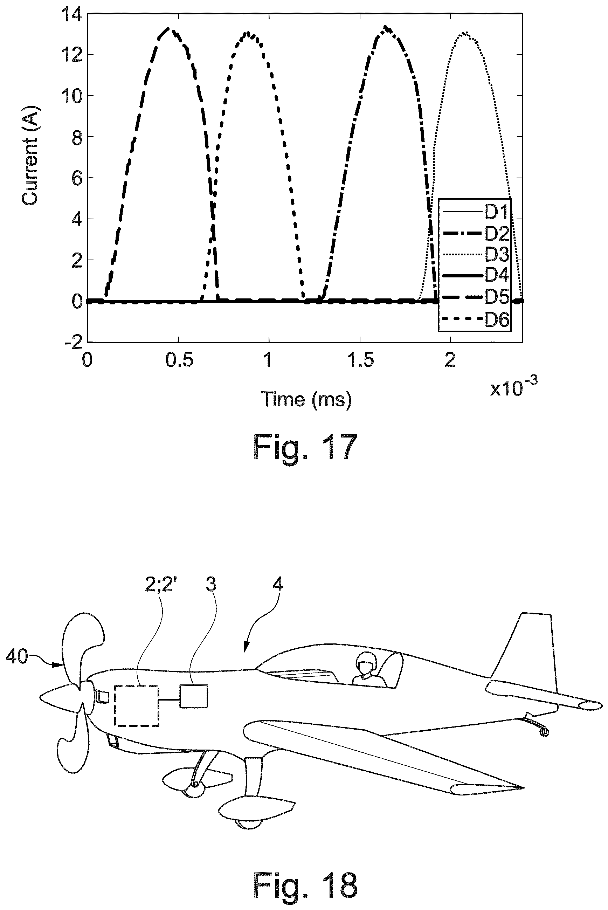

FIG. 17 further demonstrates the described effects of the inter-turn short circuit in the electric machine 2, 2' using simulation results of a finite element methods model of the faulty system state illustrated in FIG 12. Current is flowing via the diodes D1-D6 in the positive half periods.

By opening the protection switches 14, as described, the second inverter 134B is disconnected from the DC bus 30. Thereby, this circulating current is prevented. As a result, reduced heat dissipation can be obtained, and potential resulting errors can be prevented.

By opening the protection switches 14, all electric connections between the second inverter 134B and the DC bus 30 are disconnected.

One of the protection switches 14 electrically connects the second inverter 134B to the positive potential 300 of the DC bus 30 one of the protection switches 14 electrically connects the second inverter 134B to the negative potential 301 of the DC bus 30.

The control unit 131 is configured to detect the error state of at least one of the winding systems WS1, WS2 and to open the protection switches 14 in response to the detection of the error state. Even with the short circuit, after opening the protection 14, the first inverter 134A could be operated further to keep the electric machine 2, 2# operational.

FIG. 13 shown an optional configuration of the arrangement 1, according to which both inverters 134A, 134B are coupled to the DC bus 30 via a respective pair of protection switches 14.

Accordingly, the first inverter 134A (including all its inverter units) is electrically connected to positive potential 300 of the DC bus 30 via one protection switch 14 and to the negative potential 301 of the DC bus 30 via another one protection switch 14. Further, the second inverter 134B (including all its inverter units) is electrically connected to positive potential 300 of the DC bus 30 via one protection switch 14 and to the negative potential 301 of the DC bus 30 via another one protection switch 14. Thus, in this example, in total four protection switches 14 are present.

In case of FIG. 13, the control unit 131 may decide which of the two partial machines to decouple from the DC energy source 3, the one with the first inverter 134A, the one with the second inverter 134B, or both. By opening the protection switches 14 of the respective inverter 134A, 134B, all electric connections between this inverter 134A, 134B and the DC bus 30 are disconnected.

For opening the (normally closed) protection switches 14, the control unit 131 merely provides one control signal. This allows a fast provision of the signal and response of the protection switches 14.

In case of FIG. 11, the control unit 131 provides the control signal to open the protection switches 14 to both protection switches 14, e.g., synchronously. In case of FIG. 13, the control unit 131 provides the control signal to open the protection switches 14 to all four protection switches 14, e.g., synchronously.

Notably, all half bridges of the second inverter 134B in the example of FIG. 11, and all half bridges of both inverters 134A, 134B in the example of FIG. 13 are connected to the DC bus 30 via the identical two, or four, respectively, protection switches 14.

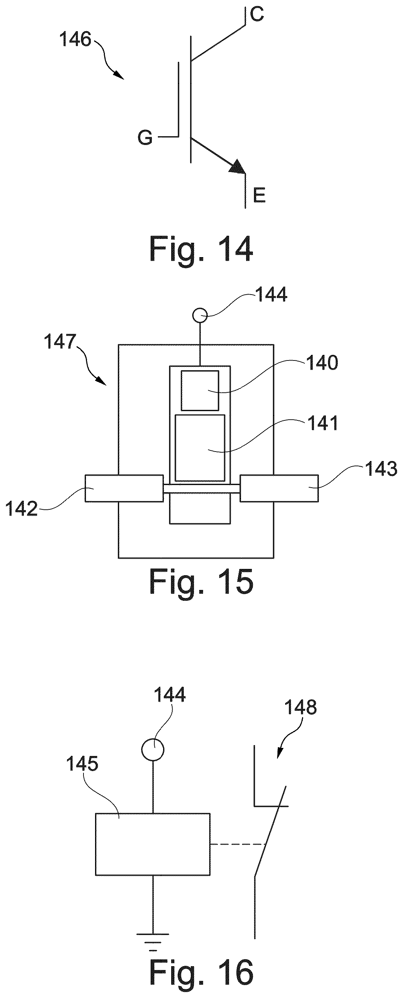

FIGs. 14 to 16 show various examples for protection switches 14 that may be used in the arrangement 1.

According to FIG. 14, each of the protection switches 14 comprises a semiconductor switch 146. Here the semiconductor switch 146 is an IGBT. The collector C and emitter E of the IGBT are connected between the positive potential 300 and the first or second inverter 134A, 134B to allow the DC current to flow from the positive potential 300 via the collector C to the emitter E. Correspondingly, the collector C and emitter E of another IGBT are connected between the negative potential 301 and the first or second inverter 134A, 134B to allow the DC current to flow via the collector C and the emitter E to the negative potential 301.

The control unit 131 provides its control signal to the gate G of the IGBTs.

According to FIG. 15, each of the protection switches 14 comprises a pyro fuse 147, i.e., a pyrotechnical fuse. Each pyro fuse 147 may be configured as shown in FIG. 15.

The pyro fuse 147 of FIG. 15 comprises a body with an inner volume (e.g., in the form of a cylinder). An electrical conductor extends between two bus terminals 142, 143 through the inner volume. A piston 141 is arranged adjacent to the electrical conductor.

The pyro fuse 147 further comprises an ignitor 140 which explodes in response to a control signal being provided on an input terminal 144 by the control unit 131. The piston 141 is arranged between the conductor and the ignitor 140. When the ignitor 140 explodes, it pushes the piston 141 against the conductor, thereby destroying the conductor and electrically disconnecting the two bus terminals 142, 143 from one another. One of the bus terminals 142, 143 is electrically connected to the respective potential 300, 301 of the DC bus 30, the other one to the respective inverter 134A, 134B.

According to FIG. 16, each of the protection switches 14 comprises a relay 148.

When a control signal is provided by the control unit 131 at an input terminal 144, a coil 145 of the relay 148 is activated and urges a mechanical switch of the relay 148 from a closed state into an open state.

FIG. 18 shows an aircraft 4 in the form of an electrically driven airplane. The aircraft 4 includes a propeller 40 which is driven by the above-described electric machine 2 according to FIG. 2 (alternatively by the electric machine 2' according to FIG. 4).

The aircraft 4 furthermore includes the energy source 3 in the form of an electric battery. The electric machine 2 is supplied with energy by the energy source 3, wherein the energy source 3 is electrically connected to the inverter system 13.

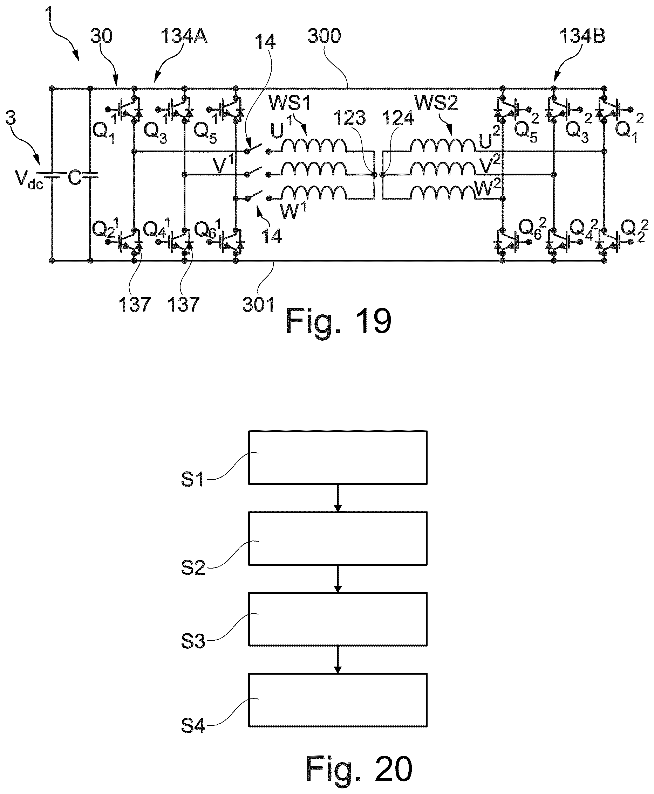

FIG. 19 shows an arrangement as described above wherein, however, protection switches 14 are provided on the AC-side of the first inverter 134A. The same number of protection switches 14 as phases U, V, W is provided, one protection switch 14 per phase. Thus, in this example, three protection switches 14 are provided. The control unit 131 is configured to open these protection switches 14 (e.g., synchronously) when a fault (a short circuit between the two winding systems WS1, WS2) is detected. The control unit 131 is further configured to operate the second inverter 134B to provide its three-phase current to the second winding system WS2. By opening all protection switches 14, the short circuit is mitigated.

Both inverters 134A, 134B are supplied by (and electrically connected to) the same DC bus 30.

FIG. 20 shows a method of operating any one of the described arrangements 1. The method comprises:
Step S1: Operating the first winding system WS1 by supplying, by means of the first inverter 134A, the first winding system WS1 with the multi-phase current and/or operating the second winding system WS2 by supplying, by means of the second inverter 134B, the second winding system WS2 with the multi-phase current.

Step S2: Detecting a fault in at least one of the winding systems WS1, WS2, e.g., as described anywhere herein.

Step S3. Opening the protection switches 14 of one of the inverters 134A, 134B.

Step S4: Continuing to operate the respective winding system WS1, WS2 of the other one of the inverters 134A, 134B.

Notably, the bifilar system does not have to be composed of three-phase winding subsystems. Any multi-phase configuration enabling potential differences between the turns of the two winding sets in the built-in test are conceivable.

Further, instead of the illustrated star point 123, 124 connections, full H-bridge inverters may be used. Then, each electrical conductor 120, 121 is connected to one inverter unit with one end and to another inverter unit at its other end. The inverter units may be configured as described above. Analogously, when a fault is detected, one of the two inverters, entirely or only with respect to the faulty phase, is decoupled from the DC bus 30 by opening a plurality of protection switches 14, or from the all phases or only the faulty phase by opening protection switches 14 on both sides of the faulty-phase electrical conductor 120, 121 or of all phases.

The disclosure is not limited to the embodiments described above, and various modifications and improvements may be made without departing from the concepts described here. Any of the features may be used separately or in combination with any other features, unless they are mutually exclusive, and the disclosure extends to and includes all combinations and sub-combinations of one or more features that are described herein.

It is to be understood that the elements and features recited in the appended claims may be combined in different ways to produce new claims that likewise fall within the scope of the present disclosure. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

While the present disclosure has been described above by reference to various embodiments, it may be understood that many changes and modifications may be made to the described embodiments. It is therefore intended that the foregoing description be regarded as illustrative rather than limiting, and that it be understood that all equivalents and/or combinations of embodiments are intended to be included in this description.

### LIST OF REFERENCE SIGNS

- 1: arrangement
- 10: body
- 11: stator tooth
- 12A-12C: winding
- 120: first electrical conductor
- 121: second electrical conductor
- 122: winding portion
- 123: first star point
- 124: second star point
- 13: inverter system
- 130A-130F: inverter unit
- 131: control unit
- 132A-132C: power electronics driver
- 133: sensor
- 134A, 134B: inverter
- 136: switch
- 137: diode
- 14: protection switch
- 140: ignitor
- 141: piston
- 142, 143: bus terminal
- 144: input terminal
- 145: coil
- 146: semiconductor switch
- 147: pyro fuse
- 148: relay
- 2, 2': electric machine
- 20: rotor
- 21: stator
- 3: energy source
- 30: DC bus
- 300: positive potential
- 301: negative potential
- 4: aircraft
- 40: propeller
- A: winding axis
- F: fault
- L: air gap
- N: north pole
- S: south pole
- U, V, W: phase
- WS1, WS2: winding system

## Claims

1. An arrangement (1), comprising:
- an electric machine (2, 2') with a first winding system (WS1) and a second winding system (WS2), wherein at least one electrical conductor (120) of the first winding system (WS1) and at least one electrical conductor (121) of the second winding system (WS2) are at least partially wound around a common winding axis (A), wherein turns of the electrical conductors (120, 121) alternate in a direction of the winding axis (A);
- a first inverter (134A) for supplying the first winding system (WS1) with a multi-phase current;
- a second inverter (134B) for supplying the second winding system (WS2) with a multi-phase current; and
- a DC bus (30) providing a DC current to each of the inverters (134A, 134B), wherein at least one of the inverters (134A, 134B) is electrically connected to the DC bus (30) and/or to the electrical conductors (120, 121) of the respective winding system (WS1, WS2) via protection switches (14).

2. The arrangement (1) of claim 1, wherein at least one of the protection switches (14) electrically connects the first inverter (134A) or the second inverter (134B) to a positive potential (300) of the DC bus (30) and at least one of the protection switches (14) electrically connects said first or second inverter (134A, 134B) to a negative potential (301) of the DC bus (30).

3. The arrangement (1) of claim 2, wherein the first inverter (134A) and the second inverter (134B) each are electrically connected to positive potential (300) of the DC bus (30) via a respective one of the protection switches (14) and to the negative potential (301) of the DC bus (30) via a respective one of the protection switches (14).

4. The arrangement (1) of any of the preceding claims, further comprising a control unit (131) configured to detect an error state of at least one of the winding systems (WS1, WS2) and to open the protection switches (14) in response to the detection of the error state.

5. The arrangement (1) of claim 4, wherein the control unit (131) is configured to detect the error state by measuring a phase current exceeding a threshold or measuring a temperature of the electrical machine (2, 2') exceeding a threshold.

6. The arrangement (1) of any of the preceding claims, wherein each of the protection switches (14) comprises a semiconductor switch (146).

7. The arrangement (1) of any of the preceding claims, wherein each of the protection switches (14) comprises a pyro fuse (147).

8. The arrangement (1) of any of the preceding claims, wherein each of the protection switches (14) comprises a relay (148).

9. The arrangement (1) of any of the preceding claims, wherein the first winding system (WS1) comprises three phases connected to one another with one respective end at a common first star point (123) and to an inverter unit (130A-130C) of the first inverter (134A) with the respective other end, and wherein the second winding system (WS2) comprises three phases connected to one another with one respective end at a common second star point (124) and to an inverter unit (130D-130E) of the second inverter (134B) with the respective other end.

10. The arrangement (1) of claim 9, wherein each of the three phases of the first winding system (WS1) or of the second winding system (WS2) is connected to the respective inverter (134A, 134B) via one of the protection switches (14).

11. The arrangement (1) of any of the preceding claims, wherein the electric machine (2, 2') comprises a stator (21) with the winding systems (WS1, WS2) and a rotor (20) rotatably mounted at the stator (21).

12. An aircraft (4) comprising the arrangement (1) of any of the preceding claims.

13. A method of operating the arrangement (1) of any of claims 1 to 11, the method comprising:
- operating (S1) the first winding system (WS1) by supplying, by means of the first inverter (134A), the first winding system (WS1) with the multi-phase current and/or operating the second winding system (WS2) by supplying, by means of the second inverter (134B), the second winding system (WS2) with the multi-phase current;
- detecting (S2) a fault in at least one of the winding systems (WS1, WS2);
- opening (S3) the protection switches (14) of one of the inverters (134A, 134B); and
- continuing (S4) to operate the respective winding system (WS1, WS2) of the other one of the inverters (134A, 134B).
